# EUROPEAN PATENT APPLICATION

(11) **EP 4 197 322 A1**
(43) Date of publication of application: **21.06.2023**
(21) Application number: 22188950.4
(22) Date of filing: 05.08.2022
(51) Int. Cl.: A01K 13/00, A45D 24/08, A46B 7/02

(54) **PROTECTION DEVICE AND GROOMING DEVICE FOR PETS**

(30) Priority: 15.12.2021 CN 202123156210 U
(71) Applicant: Shenzhen KIWI Design Co., Ltd., Shenzhen Guangdong (CN)
(72) Inventor: Zhang, Zhinan, Shenzhen (CN)
(74) Representative: Petraz, Gilberto Luigi

(57) **Abstract**

The present application provides a protection device and a grooming device for pets. The protection devices includes: a mounting case, a protection cover, and a fixing structure. The mounting case is provided with a sliding space extending though two opposite ends thereof which is used for mounting a working assembly. The protection cover is slidably connected to the sliding space. The fixing structure is connected with the mounting case and is used for fixing the protection cover as the protection cover slides to cover the working assembly. When the protection device is not in use, users may hold the mounting case and change the working state of the fixing structure to drive the protection cover to move and cover the working assembly, so that the working assembly is stored to avoid safety issues caused by the exposed working assembly, thereby improving the practicability of the protection device.

## Description

### TECHNICAL FIELD

The present application relates to the field of storage articles, and in particular to a protection device and a grooming device for pets.

### BACKGROUND TECHNOLOGY

The existing metal grooming combs for pet on the market are directly exposed, which may cause certain safety issues to children and pets, thus they need to be hung up when not in use. Therefore, the existing grooming devices lack practicability.

### SUMMARY

An objective of the present application is to provide a protection device and a grooming device for pets, to overcome the safety and practicability problem of existing grooming devices.

In order to solve the above technical problem, the present application provides a protection device, which includes:
a mounting case having a sliding space extending through two opposite ends thereof, the sliding space being used for mounting a working assembly;
a protection cover slidably connected to the sliding space; and
a fixing structure connected with the mounting case, the fixing structure being used for fixing the protection cover as the protection cover slides to cover the working assembly.

Further, the protection cover is connected with the mounting case through a first restoring member, one end of the first restoring member is fixed to the protection cover, and the other end is fixed to the mounting case. The protection cover is restored by the first restoring member when the protection cover is not fixed by the fixing structure.

Further, the first restoring member includes a plurality of first springs, each of the first springs having one end fixed to the protection cover and the other end fixed to the mounting case.

Further, a handle is fixed on one side of the mounting case.

Further, one side of the protection cover is provided with an avoidance hole extending along a sliding direction thereof, and the handle is configured into a tubular shape.

The fixing structure includes a connecting base fixed inside the handle, a fixing piece fixed on one end of the connecting base, a locking piece slidably connected with one side of the connecting base, and a driving assembly for driving the locking piece to slide.

A through-hole through which the fixing piece passes is provided on the mounting case.

The fixing piece is slidably connected to the avoidance hole, and fixedly connected with the working assembly.

A locking hole is provided on the same side with the protection cover, and the locking piece is inserted into the locking hole when the protection cover covers the working assembly.

Further, the driving assembly includes a pushing member slidably connected to an inside of the handle, and an engaging block fixed to the inside of the handle. One end of the engaging block is provided with an engaging slot, and the pushing member includes a pushing base having one end connected with the locking piece, and the other end extending out of a distal end of the handle, and a matching block fixed at the one end of the pushing base. The matching block is engaged with the engaging slot when the locking piece is inserted into the locking hole.

Further, the locking piece is connected with the pushing base through a connecting rod, one end of the connecting rod is fixed to one end of the pushing member, and the other end thereof is fixed to one end of the locking piece.

The driving assembly further includes a second restoring member, one end of the second restoring member is fixed to the connecting base, and the other end thereof is fixed to the connecting rod.

The matching block is slidably connected with the engaging slot, and the second restoring member drives the matching block to detach from the engaging slot when the matching block is inserted into the engaging slot.

Further, a plurality of limiting grooves are provided on an inner side of the connecting base, extending along a lengthwise direction of the connecting base, and an upper end of the connecting rod is fixed with a plurality of flexible blocks correspondingly slidably connected to the limiting grooves.

An embodiment of the present application further provides a grooming device for pets, which includes a working assembly and the above-mentioned protection device. The working assembly is a dematting sheet, and a plurality of dematting slits are provided at intervals along a lengthwise direction of the dematting sheet.

Further, an inner side of an opening of the protection cover is in contact with an outer periphery of the dematting sheet.

The present application provides a protection device and a grooming device for pets. The protection device includes: a mounting case having a sliding space extending through two opposite ends thereof, the sliding space being used for mounting a working assembly; a protection cover slidably connected to the sliding space; and a fixing structure connected with the mounting case, the fixing structure being used for fixing the protection cover as the protection cover slides to cover the working assembly. When not in use, users may hold the mounting case and change the working state of the fixing structure to drive the protection cover to move and cover the working assembly, so that the working assembly is stored to avoid safety issues caused by the exposed working assembly, thereby improving the practicability of the protection device.

### BRIEF DESCRIPTION OF THE DRAWINGS

In order to explain the technical proposals of the embodiments of the present application more clearly, the drawings mentioned in the description of the embodiments will be briefly described. Apparently, the drawings described below are some embodiments of the present application, those skilled in the art can obtain other drawings based on these drawings without creative work.
Fig. 1 is a structural view of the protection cover according to an embodiment of the present application;
Fig. 2 is an exploded view of the protection cover according to the embodiment of the present application;
Fig. 3 is a structural view when the locking piece is not inserted into the locking hole according to the embodiment of the present application;
Fig. 4 is a structural view when the locking piece is inserted into the locking hole according to the embodiment of the present application;
Fig. 5 is a partially enlarged view of the matching block according to the embodiment of the present application;
Fig. 6 is a sectional view of the engaging block according to the embodiment of the present application; and
Fig. 7 is a sectional view of the second spring according to the embodiment of the present application.

### Reference signs:

1 mounting case, 11 sliding space, 2 protection cover, 21 avoidance hole. 3 first spring, 31 connecting part, 32 receiving part, 4 handle, 41 first protruded edge, 42 first fixing block, 5 connecting base, 51 fixing piece, 52 locking piece, 521 locking hole, 53 pushing member, 54 engaging block, 55 engaging slot, 56 first guiding block, 57 first fixing hole, 58 second protruded edge, 581 first guiding surface, 582 third guiding surface, 6 pushing base, 61 matching block, 62 second guiding block, 63 second guiding surface, 64 storage opening, 65 third guiding block, 66 second fixing hole, 67 second fixing block, 7 connecting rod, 71 first sleeve, 72 second sleeve, 8 second restoring member, 9 limiting groove, 91 flexible block, 92 vertical bar, 93 fourth guiding block, 10 dematting sheet, 101 receiving piece, 102 limiting post, 103 limiting ring, 104 recess

### DESCRIPTION OF THE EMBODIMENTS

The technical proposals in the embodiments of the present application will be clearly and completely described in conjunction with the accompanying drawings in the embodiments of the present application. Apparently, the described embodiments are some of the embodiments of the present application, rather than all of them. Based on the embodiments in the present application, all other embodiments obtained by those skilled in the art without creative work shall fall within the scope of protection of the present application.

It should be understood that when used in the specification and the appended claims, the terms "including" and "comprising" indicate the existence of the described features, integers, steps, operations, elements and/or components, but do not exclude the existence or addition of one or more other features, integers, steps, operations, elements, components, and/or collections thereof.

It should also be understood that the terms used in the specification of the present application are only for describing the specific embodiments and are not intended to limit the application. As used in the specification and the appended claims of the present application, unless indicated otherwise in the context, the singular forms "a", "an" and "the" are intended to include plural forms.

It should be further understood that the term "and/or" used in the specification and appended claims of the present application refers to any and all possible combinations of one or more of the associated listed items, and includes these combinations.

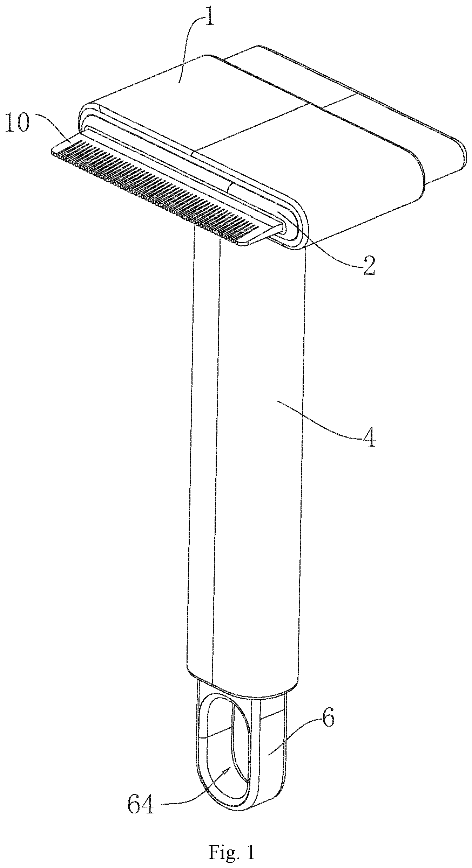

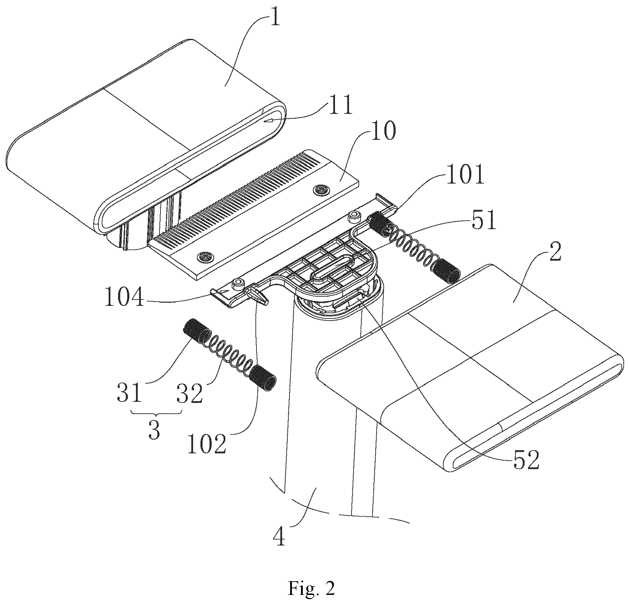

Referring to Figs. 1 and 2, the protection devices includes: a mounting case 1, a protection cover 2, and a fixing structure. The mounting case 1 is provided with a sliding space 11 extending though two opposite ends thereof, and the sliding space is used for mounting a working assembly. The protection cover 2 is slidably connected to the sliding space 11. The fixing structure is connected with the mounting case 1 and is used for fixing the protection cover 2 as the protection cover 2 slides to cover the working assembly. When not in use, users may hold the mounting case 1 and change the working state of the fixing structure to drive the protection cover 2 to move and cover the working assembly, so that the working assembly is stored to avoid safety issues caused by the exposed working assembly, thereby improving the practicability of the protection device.

It is to be noted, the working assembly of the present application includes a blade, a dematting sheet 10, a spike, and the like. The working assembly can be combined with the mounting case 1 for ease of holding by the user, and the working assembly can be stored by the protection cover 2 when not in use in order to avoid potential damage to the working assembly or safety issues.

Further, a handle 4 is fixed on one side of the mounting case 1.

For ease of describing, terms left and right, up and down herein are defined based on the orientation of the protection device in Fig. 1, hence the sliding space 11extends through left and right ends of the mounting case 1, and the handle 4 is fixed on a lower side of the mounting case 1, so that the handle 4 is perpendicular to the mounting case 1. The above-mentioned design allows users to easily operate the working assembly by holding the handle 4.

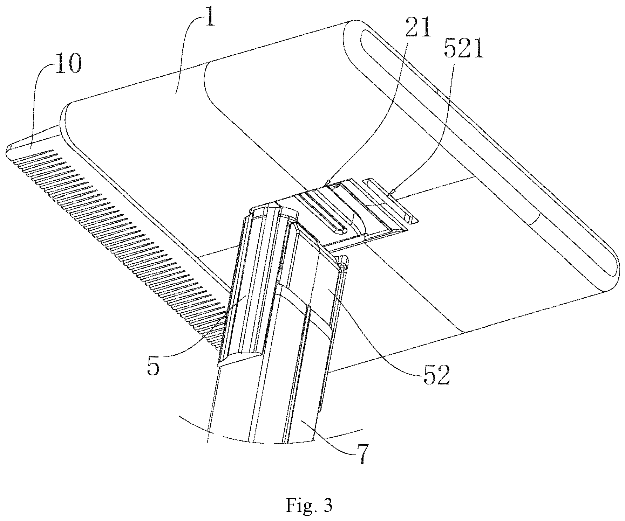

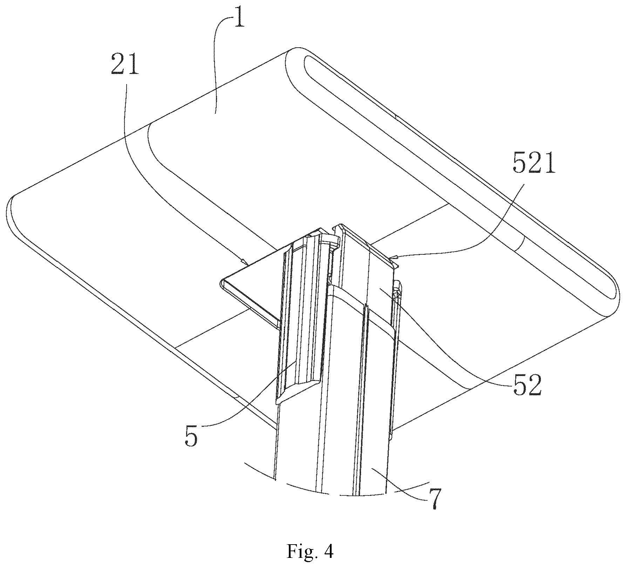

Combining Figs. 2 to 4, further, one side of the protection cover 2 is provided with an avoidance hole 21 extending along a sliding direction thereof, and the handle 4 is configured into a tubular shape. The fixing structure includes a connecting base 5 fixed inside the handle 4, a fixing piece 51 fixed on one end of the connecting base 5, a locking piece 52 slidably connected with one side of the connecting base 5, and a driving assembly for driving the locking piece 52 to slide.

A through-hole through which the fixing piece 51 passes is provided on the mounting case 1. The fixing piece 51 is slidably connected to the avoidance hole 21, and fixedly connected with the working assembly. A locking hole 521 is provided on the same side with the protection cover 2, and the locking piece 52 is inserted into the locking hole 521 when the protection cover 2 covers the working assembly.

In the present embodiment, the handle 4 is configured into a tubular shape, which may not only reduce the weight of the protection device, but also allow the fixing structure to be mounted inside the handle 4, thereby improving the aesthetics of the protection device as well as protecting the fixing structure. Specifically, the protection cover 2 is provided with a protection space communicated with the avoidance hole 21, and the working assembly is located in the protection space, so that the protection cover 2 can cover the working assembly when sliding to a preset position.

In this embodiment, the fixing piece 51 is connected to the working assembly through the receiving piece 101, and the receiving piece 101 is provided with a recess 104 for accommodating the working assembly. The working assembly is embedded in the recess 104 and fixed on the receiving piece 101 through bolts. An upper end of the fixing piece 51 passes through the avoidance hole 21 and is interference fitting with the receiving piece 101, thereby forming a fixed connection between the mounting case 1, the handle 4, the connecting base 5, the fixing piece 51, the receiving piece 101 and the working assembly.

Further, in order to avoid disruption to the working assembly by the protection cover 2 during use, the protection cover 2 is connected to the mounting case 1 through a first restoring member. One end of the first restoring member is fixed on the protection cover 2 and the other end is fixed on the mounting case 1. The first restoring member forces the protection cover 2 to restore to the original position when the protection cover 2 is not fixed by the fixing structure.

In a specific embodiment, the first restoring member is a first spring 3 with one end fixed on the protection cover 2 and the other end fixed on the mounting case 1, and a plurality of first springs 3 may be provided.

In the present embodiment, two first springs 3 are symmetrically arranged, and two limiting posts 102 are symmetrically arranged at one end of the receiving piece 101 away from the working assembly. Taking one of the first springs 3 as an instance, one end of the first spring 3 is sleeved on one of the limiting posts 102 and fixed to the receiving piece 101, and the other end thereof is in contact with or fixed on an inner wall of the protection cover 2. The above design facilitates the installation of the first springs 3. It should be noted that the quantity and position of the first springs 3 are not limited herein.

Preferably, the first springs 3 include two connecting parts 31 and a receiving part 32 that are integrally formed; the receiving part 32 is located between the two connecting parts 31. The pitch of the connecting part 31 is smaller than that of the receiving part 32, and the two connecting parts 31 are respectively connected with the protection cover 2 and the receiving piece 101. Therefore, the structural strength of the first springs 3 may be effectively improved.

When the working assembly is in use, the first springs 3 drive the protection cover 2 to expose the working assembly, where the first springs 3 are in a normal relaxed state. After finishing using the working assembly, the protection cover 2 is pushed to slide relatively to the mounting case 1, and the fixing piece 51 slides along the lengthwise direction of the avoidance hole 21 until the protection cover 2 completely covers the working assembly; the upper end of the locking piece 52 is inserted into the locking hole 521 by the driving assembly, so as to fix the protection cover 2 with respect to the mounting sleeve 1, and the first springs 3 are in a compressed state. When using the working assembly again, the working state of the driving assembly is changed again, so that the locking piece 52 slides out of the locking hole 521, and the protection cover 2 moves away from the working assembly under the elastic restoring force of the first springs 3, namely the working assembly can be exposed and ready to use.

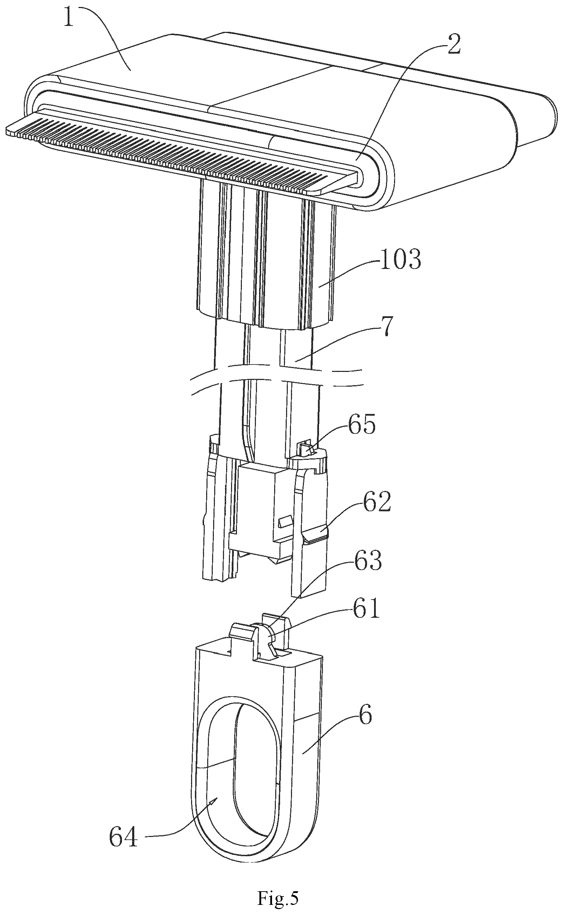

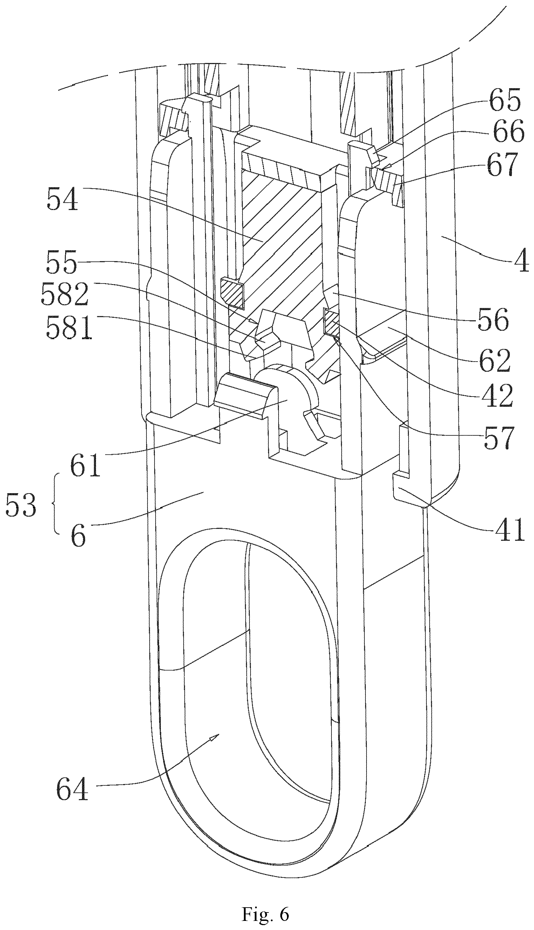

As shown in Figs. 5 and 6, in an embodiment, the driving assembly includes a pushing member 53 slidably connected to the inside of the handle 4, and an engaging block 54 fixed inside the handle 4. One end of the engaging block 54 is provided with an engaging slot 55. The pushing member 53 includes a pushing base 6 having one end connected to the locking piece 52 and the other end extending out of the end of the handle 4, and a matching block 61 fixed at the one end of the pushing base 6. The matching block 61 is engaged with the engaging slot 55 when the locking piece 52 is inserted into the locking hole 521.

Specifically, first guiding blocks 56 are provided at both ends of the engaging blocks 54, and lower ends of the first guiding blocks 56 and the engaging block 54 are provided with first fixing holes 57. First fixing blocks 42 for inserting into the corresponding first fixing hole 57 are fixed inside the handle 4. During installation, the engaging blocks 54 slide into an opening at the lower end of the handle 4, such that the first guiding blocks 56 are pressed against the first fixing blocks 42, and the first guiding blocks 56 are deformed accordingly until the first fixing blocks 42 enter into the first fixing holes 57 to fix the handle 4 and the engaging block 54.

Specifically, second guiding blocks 62 are arranged on opposite sides of the pushing base 6, and a first protruded edge 41 extending inwardly is provided at the opening of the lower end of the handle 4. During installation, the pushing member 53 slides into the opening at the lower end of the handle 4, such that the second guiding blocks 62 are pressed against the first protruded edge 41, and the second guiding blocks 62 are deformed accordingly until entering into the handle 4 to connect the handle 4 and the pushing member 53.

Specifically, two second protruded edges 58 extending toward each other are symmetrically provided on the opening of the engaging slot 55. The pushing base 6 is pushed from the bottom, such that the matching block 61 moves upward and is abutted against the second protruded edges 58. The second protruded edges 58 are pressed and deformed, so that the matching block 61 enters the engaging slot 55. The second protruded edges 58 are recovered under elasticity, thereby preventing the matching block 61 from moving downward after the matching block 61 enters the engaging slot 55.

Preferably, a first guiding surface 581 is provided on a lower side of the second protruded edges 58, and a second guiding surface 63 for abutting the first guiding surface 581 is provided on an upper end of the matching block 61. the matching block 61 is engaged into the engaging slot 55 by cooperation of the first guiding surface 581 and the second guiding surface 63.

Referring to Figs. 5 to 7, furthermore, the locking piece 52 is connected with the pushing base 6 through the connecting rod 7, and one end of the connecting rod 7 is fixed to one end of the pushing base 6 and the other end thereof is fixed to one end of the locking piece 52. The driving assembly further includes a second restoring member 8, one end of the second restoring member 8 is fixed on the connecting base 5, and the other end is fixed on the connecting rod 7.

The matching block 61 is slidably connected to the engaging slot 55. The second restoring member 8 drives the matching block 61 to detach from the engaging slot 55 after the matching block 61 is inserted into the engaging slot 55.

Specifically, the connecting rod 7 is connected to the pushing base 6 through two third guiding blocks 65. The third guiding blocks 65 are fixed on the upper end of the pushing base 6, and second fixing holes 66 are formed between the third guiding blocks 65 and the upper end of the pushing base 6, and second fixing blocks 67 engaged with the second fixing holes 66 are provided at a lower end of the connecting rod 7. During installation, the third guiding blocks 65 are deformed by the second fixing blocks 67, until the second fixing blocks 67 are inserted into the second fixing holes 66, and the third guide blocks 65 are restored, so as to fixedly connect the connecting rod 7 and the pushing base 6.

After the matching block 61 is inserted into the engaging slot 55, the matching block 61 is forced to abut against a side of the second protruding edges 58 away from the first guiding surface 581 by the second restoring member 8, with a preset sliding distance between the upper end surface of the matching block 61 and the bottom wall of the engaging slot 55. When detaching the locking piece 52 from the locking hole 521, the pushing base 6 is pressed, so that the matching block 61 moves upward and compress the second restoring piece 8. The pushing base 6 is pushed for a preset distance and released, and the locking piece 52, the connecting rod 7, the matching block 61 and the pushing base 6 is driven to move downward under the elastic restoring force of the second restoring member 8; the matching block 61 is pressed against the second protruding edges 58, so that the second protruding edges 58 are deformed, until the matching block 61 is detached from the engaging slot 55. It should be noted that, after the pushing base 6 enters the engaging slot 55, the elasticity of the second restoring member 8 is unable to push the matching block 61 out of the engaging slot 55 without external forces being applied.

Preferably, a third guiding surface 582 is provided on the side of the second protruded edges 58 facing away from the first guiding surface 581.

Furthermore, a lower end of the pushing base 6 is provided with a storage opening 64 for hanging the protection device on the wall for storage.

In this embodiment, the second restoring member 8 is a second spring, a side of the upper end of the connecting rod 7 is provided with a first sleeve 71 for accommodating a lower end of the second spring, and the connecting base 5 is provided with a second sleeve 72 for accommodating an upper end of the second spring. The connecting base 5 is fixedly connected to the mounting case 1 through screws.

Furthermore, a plurality of limiting grooves 9 are provided on an inner side of the connecting base 5, extending along a lengthwise direction of the connecting base 5, and a plurality of flexible blocks 91 correspondingly slidably connected to the limiting grooves 9 are provided on the upper end of the connecting rod 7.

In this embodiment, a limiting ring 103 is fixed on the lower side of the mounting case 1. The connecting base 5 is embedded in the limiting ring 103. The handle 4 is sleeved on the limiting ring 103, and the handle 4 is fixedly connected to the lower side of the mounting easel through interference fitting. The number of the limiting grooves 9 are two, arranged symmetrically, and the two limiting grooves 9 are vertical, so that the downward moving distance of the connecting rod 7 is limited, thereby reducing the occurrence of the separation of the pushing member 53 and the handle 4. In this embodiment, each flexible block 91includes a vertical bar 92 and a fourth guiding block 93 fixed on an upper end of the vertical bar 92. During installation, the fourth guiding blocks 93 are abutted against the lower side of the connecting base 5, so that the vertical bars 92 are bent and deformed inward, and the vertical bars 92 are restored after the fourth guiding blocks 93 enter into the limiting grooves 9.

An embodiment of the present application further provides a grooming device for pets, which includes a working assembly and the above-mentioned protection device. The working assembly is a dematting sheet 10, and a plurality of dematting slits are provided at intervals along a lengthwise direction of the dematting sheet 10.

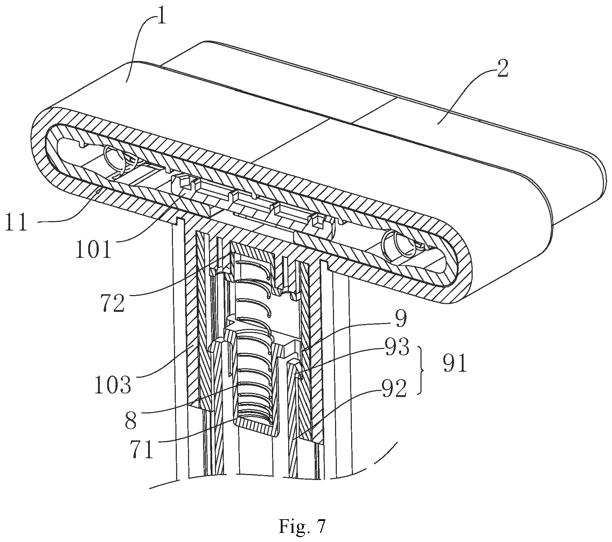

In the present embodiment, referring to Figs. 1 and 7, the dematting sheet 10 may be used for grooming or dematting pets' hair with the plurality of dematting slits provided thereon. The protection cover 2 covers the dematting sheet 10 when the grooming device is not in use, which may prevent the sharp ends of the dematting sheet 10 from causing damage to pets or children, thereby reducing potential safety hazards.

Further, the inner side of the opening of the protection cover 2 is in contact with an outer periphery of the dematting sheet 10.

That is, when the protection cover 2 slides toward and comes in contact with the outer periphery of the dematting sheet 10, the hair accumulated on the dematting slits can be removed, which improves the applicability and practicability of the grooming device for pets of the present application.

It should be noted that, the dematting sheet 10 of the grooming device of the present application is preferably made of stainless steel, and the other components are preferably made of ABS material.

It should be noted that for those of ordinary skill in the art, without departing from the principles of the present application, several improvements and modifications can also be made to the present application, and these improvements and modifications shall fall within the scope of protection of the claims of the present application.

## Claims

1. A protection device, comprising:
a mounting case (1) having a sliding space (11) extending through two opposite ends thereof, the sliding space being used for mounting a working assembly;
a protection cover (2) slidably connected to the sliding space (11); and
a fixing structure connected with the mounting case (1), the fixing structure being used for fixing the protection cover (2) as the protection cover (2) slides to cover the working assembly.

2. The protection device according to claim 1, wherein the protection cover (2) is connected with the mounting case (1) through a first restoring member, one end of the first restoring member is fixed to the protection cover (2), and the other end is fixed to the mounting case (1), the protection cover (2) is restored by the first restoring member when the protection cover (2) is not fixed by the fixing structure.

3. The protection device according to claim 2, wherein the first restoring member includes a plurality of first springs (3), each of the first springs (3) having one end fixed to the protection cover (2) and the other end fixed to the mounting case (1).

4. The protection device according to any one of claims 1-3, further comprising a handle (4) fixed on one side of the mounting case (1).

5. The protection device according to claim 4, wherein one side of the protection cover (2) is provided with an avoidance hole (21) extending along a sliding direction thereof, and the handle (4) is configured into a tubular shape,
the fixing structure comprises a connecting base (5) fixed inside the handle (4), a fixing piece (51) fixed on one end of the connecting base (5), a locking piece (52) slidably connected with one side of the connecting base (5), and a driving assembly for driving the locking piece (52) to slide,
a through-hole through which the fixing piece (51) passes is provided on the mounting case (1),
the fixing piece (51) is slidably connected to the avoidance hole (21), and fixedly connected with the working assembly, and
a locking hole (521) is provided on the same side with the protection cover (2), and the locking piece (52) is inserted into the locking hole (521) when the protection cover (2) covers the working assembly.

6. The protection device according to claim 5, wherein the driving assembly comprises a pushing member (53) slidably connected to an inside of the handle (4), and an engaging block (54) fixed to the inside of the handle (4); one end of the engaging block (54) is provided with an engaging slot (55), and the pushing member (53) comprises a pushing base (6) having one end connected with the locking piece (52), and the other end extending out of a distal end of the handle (4), and a matching block (61) fixed at the one end of the pushing base (6), the matching block (61) is engaged with the engaging slot (55) when the locking piece (52) is inserted into the locking hole (521).

7. The protection device according to claim 6, wherein the locking piece (52) is connected with the pushing base (6) through a connecting rod (7), one end of the connecting rod (7) is fixed to the one end of the pushing base (6), and the other end thereof is fixed to one end of the locking piece (52),
the driving assembly further comprises a second restoring member (8), one end of the second restoring member (8) is fixed to the connecting base (5), and the other end thereof is fixed to the connecting rod (7), and
the matching block (61) is slidably connected with the engaging slot (55), and the second restoring member (8) drives the matching block (61) to detach from the engaging slot (55) when the matching block (61) is inserted into the engaging slot (55).

8. The protection device according to claim 7, wherein a plurality of limiting grooves (9) are provided on an inner side of the connecting base (5), extending along a lengthwise direction of the connecting base (5), and an upper end of the connecting rod (7) is fixed with a plurality of flexible blocks (91) correspondingly slidably connected to the limiting grooves (9).

9. A grooming device for pets, comprising a working assembly and the protection device according to any one of claims 1-8, wherein the working assembly is a dematting sheet (10), and a plurality of dematting slits are provided at intervals along a lengthwise direction of the dematting sheet (10).

10. The grooming device for pets according to claim 9, wherein an inner side of an opening of the protection cover (2) is in contact with an outer periphery of the dematting sheet (10).
